# FASCICULE DE BREVET EUROPEEN

(11) **EP 3 519 763 B1**
(45) Date de publication et mention de la délivrance du brevet: **12.01.2022**
(21) Numéro de dépôt: 17780055.4
(22) Date de dépôt: 26.09.2017
(51) Int. Cl.: G01B 11/24, G03B 15/05, G01N 21/88, H05B 33/08, H05B 35/00, H04N 5/235, H04N 5/225, H05B 41/00

(54) **DISPOSITIF DE VISION INDUSTRIELLE**
BILDVERARBEITUNG VORRICHTUNG
MACHINE-VISION DEVICE

(30) Priorité: 03.10.2016 FR 1659504
(43) Date de publication de la demande: 07.08.2019
(73) Titulaire: TPL Vision UK Ltd, CHARING (KENT) TN27 0JW (GB)
(72) Inventeur: MAZEAUD, Guillaume, PH2 7LF Glencarse Perth and Kinross (GB)
(74) Mandataire: Nony
(86) Numéro de dépôt international: PCT/EP2017/074423
(87) Numéro de publication internationale: WO 2018/065265

(56) Documents cités:
- WO-A1-2015/128760
- US-A- 5 500 732
- US-A- 6 061 522
- US-A1- 2004 151 487
- US-A1- 2010 110 682
- US-A1- 2014 340 573
- US-B1- 6 788 411

## Description

### Domaine technique

La présente invention se rapporte à une interface de commande pour dispositif d'éclairage de vision industrielle, à un dispositif d'éclairage pour vision industrielle, à un dispositif de vision industrielle et à un dispositif de convoyage de biens incluant une telle interface. Selon un autre aspect, l'invention se rapporte à un procédé de commande d'un dispositif d'éclairage de vision industrielle.

### État de la technique

Dans le domaine industriel, il est connu de contrôler des biens, notamment convoyés sur une ligne de convoyage relativement à des défauts, des dimensions, des couleurs, ou encore de lire des codes présents sur ces biens. Ce contrôle est avantageusement réalisé de manière automatisée afin d'être objectif et répétitif. Pour ce faire, un dispositif de vision industrielle est mis en œuvre, par exemple pour trier les biens en fonction du contrôle réalisé. Par exemple, un bras mécanique peut être mis en œuvre pour retirer d'une ligne de convoyage les biens considérés comme défectueux. Le dispositif de vision industrielle comporte des sources lumineuses éclairant une zone d'intérêt traversée par les biens à trier, et une caméra pour prendre des images de la lumière reflétée par la zone d'intérêt traversée par les biens. Les images sont ensuite traitées par une unité électronique, par exemple un ordinateur, et le bras est commandé en fonction du résultat de ce traitement des images.

La qualité du contraste, et donc la robustesse des contrôles, dépendant de la méthode d'éclairage. L'éclairage peut être par exemple directif, indirect diffus, coaxial, avec une incidence par rapport à l'axe de la caméra, rasant, et encore en ombre chinoise. De même, on peut avoir besoin d'éclairer en rouge des pièces rouges sur un tapis bleu, les pièces apparaissant ainsi blanches sur un fond noir aux yeux d'une caméra monochrome.

Enfin, classiquement, les sources lumineuses n'éclairent pas en continu, mais de manière intermittente, à la façon d'un stroboscope. Les sources lumineuses émettent ainsi des flashs successifs d'une durée égale ou légèrement supérieure au temps d'exposition de la caméra du dispositif de vision industrielle. Ceci permet de « figer » les biens en mouvement sur le tapis de convoyage pour la prise de vue à l'aide de la caméra. Ceci permet en outre d'accroître la durée de vie potentielle des sources lumineuses, notamment quand celles-ci sont des Diodes Electro Luminescentes (DEL).

L'allumage et l'extinction des sources lumineuses sont généralement réalisés à l'aide de sorties tout-ou-rien (TOR) de la caméra ou d'un PLC (pour l'anglais « *Programmable Logic Controler* », ou Automate Programmable Intelligent API), voire via des bus de terrain pour les éclairages équipés d'interface *ad hoc,* tels qu'Ethernet, RS485, RS232, DeviceNet, Profibus ou autres. Ces interfaces sont cependant rares du fait d'un coût élevé et de la complexité de programmation associée, en particulier pour commander plusieurs sources lumineuses, en séquences coordonnées, selon des couleurs différentes et/ou des intensités lumineuses différentes. Les bus de terrain sont alors les seules solutions proposées. Ils présentent cependant une réactivité limitée qui peut nuire à la précision des séquences d'allumages commandés.

Par ailleurs, il existe des systèmes de caméra disposant d'un éclairage à DEL intégré. Cependant l'éclairage intégré ne permet qu'un éclairage directif et monochrome, ce qui limite les possibilités de définir une méthode d'éclairage optimale dans une situation déterminée.

Il existe donc un besoin pour un dispositif d'éclairage pour vision industrielle ne présentant pas les inconvénients susmentionnés, et permettant notamment d'éviter les câblages compliqués, les connexions réseau et les programmes d'interface, tout en offrant une grande flexibilité pour définir la méthode d'éclairage.

US2014340573A1 divulgue une coque pour téléphone portable. US2014340573A1 ne divulgue pas une pluralité de capteurs de lumière configurés pour capter chacun un signal lumineux respectif issu d'une pluralité de sources lumineuses du téléphone, et pour ne détecter qu'un spectre lumineux d'une largeur inférieure à 50 nm.

### Résumé de l'invention

En réponse à ce besoin, l'invention propose un dispositif de vision industrielle selon la revendication 1.

L'interface de commande comprend :
- une pluralité de capteurs de lumière pour capter chacun un signal lumineux d'origine respectif et émettre un signal de capteur respectif en réponse à la capture dudit signal lumineux d'origine respectif ;
- une unité électronique de traitement dudit signal de capteur respectif configuré de manière à émettre, en conséquence dudit traitement, un signal de commande respectif à au moins une sortie respective de l'unité électronique de traitement.

Après connexion d'une, de préférence plusieurs sorties de l'unité électronique de traitement, à une, de préférence plusieurs sources lumineuses asservies respectives, les signaux de commande respectifs permettent ainsi de commander la ou les sources lumineuses asservies.

Ainsi, l'interface permet de commander un éclairage externe à l'aide de signaux lumineux d'origine émis, par exemple, par des sources lumineuses incluses dans le système de caméra, notamment lorsque ces sources lumineuses ne sont pas adaptées pour garantir un contraste acceptable pour le traitement de l'image. Cette interface est simple à réaliser et présente un encombrement réduit.

Selon des modes de réalisation préférés, l'interface présente une ou plusieurs des caractéristiques suivantes, prises seules ou en combinaison :
- les capteurs de lumière sont configurés pour ne détecter qu'un spectre lumineux de préférence sensiblement centré (+/- 20 nm) sur une longueur d'onde discrète choisie parmi 470nm, 525nm, 635nm, 660nm, 850nm, et 880nm ;
- l'unité électronique est configurée de manière identifier une source lumineuse asservie et de manière à générer un signal de commande pour ladite source lumineuse asservie en fonction d'une intensité lumineuse et/ou d'une couleur à émettre par ladite source lumineuse asservie ; ainsi, le signal de commande détermine une intensité lumineuse et/ou une couleur de la source lumineuse asservie identifiée par l'unité électronique et commande l'éclairage de cette source lumineuse asservie en fonction du traitement des signaux de capteur reçus ;
- l'unité électronique est configurée de manière que l'intensité dudit signal de commande soit proportionnelle, de préférence sensiblement égale, à l'intensité d'un signal lumineux d'origine ;
- l'unité électronique est configurée de manière à définir les signaux de commande destinés à piloter des sources lumineuses asservies en fonction de :
   - la chronologie des signaux de capteur, notamment en fonction de la séquence d'allumage des sources lumineuses d'origine, et/ou
   - l'origine des signaux de capteur, et notamment en fonction de la position des capteurs de lumière ayant généré lesdits signaux de capteur, et/ou
   - la couleur des signaux lumineux d'origine ;
- le signal lumineux d'origine reçu par un capteur de lumière, de préférence par chaque capteur de lumière, est de préférence issu d'une ou plusieurs sources lumineuses d'origine intégrées dans un système de caméra ;
- la ou les sources lumineuses asservies sont externes audit système de caméra, c'est-à-dire ne sont pas intégrées à la caméra et, en particulier, ne sont pas fixées rigidement à la caméra ;
- les sources lumineuses d'origine sont des diodes électroluminescentes ;
- les capteurs de lumière sont répartis sur un support de capteurs, de préférence de forme générale rectangulaire, comportant une ouverture disposée de préférence au centre du support de capteurs ;
- le support de capteurs présente :
   - une longueur supérieure à 50 mm et/ou inférieure à 90 mm, de préférence égale à 70 mm ; et/ou
   - une largeur supérieure à 30 mm et/ou inférieure à 60 mm, de préférence égale à 45 mm ; et/ou
   - une ouverture, de préférence circulaire, de rayon supérieur à 12 mm et/ou inférieur à 30 mm ;
- les capteurs de lumière sont fixés sur le support de capteurs avec une densité d'au moins un capteur de lumière pour 9 mm² et/ou d'au plus un capteur de lumière par ^{mm2.}
- l'unité électronique de traitement est un circuit intégré, notamment un circuit logique programmable, de préférence un réseau de portes programmables.

Le dispositif d'éclairage pour vision industrielle comprend :
- une interface de commande décrite ci-dessus, et
- une ou plusieurs sources lumineuses asservies, chacune reliée à une sortie respective de l'unité électronique de traitement par des moyens de connexion respectifs, de manière à être commandée avec le signal de commande délivré à ladite sortie.

Selon des modes de réalisation préférés, le dispositif d'éclairage présente une ou plusieurs des caractéristiques suivantes, prises seules ou en combinaison :
- la ou les sources lumineuses asservies sont chacune une diode électroluminescente ou un groupe de diodes électroluminescentes ;
- les sources lumineuses asservies sont fixées sur un ou plusieurs supports de sources lumineuses asservies, le ou les supports de sources lumineuses asservies étant de préférence de forme générale plane, notamment de forme rectangulaire, ou hémisphérique ;
- les sources lumineuses asservies sont fixées sur un unique support de sources lumineuses asservies, muni d'une ouverture, l'ouverture de support de sources lumineuses asservies étant de préférence disposée au centre dudit support ;
- les sources lumineuses asservies sont fixées sur un support de sources lumineuses asservies muni d'une ouverture de support de sources lumineuses asservies, et les capteurs de lumière sont fixés sur un support de capteurs présentant une ouverture de support de capteurs coaxiale avec ladite ouverture de support de sources lumineuses asservies ;
- la ou les sources lumineuses asservies et/ou la ou les sources lumineuses d'origine sont configurées pour fonctionner de manière intermittente, de préférence pour émettre des flashs d'une durée inférieure à 10 ms, de préférence inférieure à 3 ms et préférentiellement inférieure à 200 µs.

Dans un mode de réalisation, ledit capteur de lumière est disposé de manière à capter directement de la lumière émise par plusieurs, voire par toutes les sources lumineuses d'origine.

Dans un mode de réalisation, chaque capteur de lumière est disposé de manière à capter directement de la lumière émise par une unique source lumineuse d'origine respective ou par un unique groupe de sources lumineuses d'origine émettant de manière synchrone.

Dans un mode de réalisation, le dispositif d'éclairage comporte un masque configuré de manière à réfléchir et/ou absorber plus de 50%, de préférence plus de 70%, de préférence plus de 80%, de préférence plus de 90%, de préférence encore sensiblement 100% de l'intensité lumineuse des signaux lumineux d'origine émis par la ou les sources lumineuses d'origine, de préférence intégrées dans la caméra.

De préférence, le masque supporte les capteurs de lumière. Le masque peut être constitué par le support de capteurs. Ainsi, de préférence, le ou les signaux d'origine ne sont pas projetés sur la scène observée par l'objectif de la caméra et ne sont sensiblement utilisés que pour irradier le masque et les capteurs de lumière.

De préférence encore, les capteurs de lumière sont disposés, et en particulier isolés par le masque, de manière que la lumière qu'ils reçoivent provienne, pour plus de 50%, de préférence plus de 70%, de préférence plus de 90%, de préférence sensiblement 100% de leur intensité, de la ou des sources lumineuses d'origine, de préférence intégrées dans la caméra. Avantageusement, la lumière captée par les capteurs de lumière n'est sensiblement pas influencée par l'environnement extérieur au système de caméra. Le contrôle de la qualité de la lumière émise par la ou les sources lumineuses asservies en est améliorée. Dans un mode de réalisation préféré, le masque isole physiquement de la scène observée par l'objectif de la caméra, la caméra et ladite au moins une source lumineuse d'origine, à l'exception de l'objectif de ladite caméra, qui s'étend de préférence face à une ouverture ménagée dans le masque, voire qui s'étend à travers ladite ouverture.

Ainsi, la caméra observe une scène éclairée par la ou les sources lumineuses asservies et sensiblement non éclairée par la ou les sources lumineuses d'origine.

De préférence, moins de 50%, moins de 30%, de préférence moins de 10% de l'intensité de la lumière émise par la ou les sources lumineuses asservies éclairent le système de caméra. Dans un mode de réalisation préféré, le masque isole donc non seulement la ou les sources lumineuses d'origine de la scène observée par l'objectif de la caméra, mais aussi isole le ou les capteurs de lumière de la ou des sources lumineuses asservies. L'asservissement des sources lumineuses asservies ne dépend donc sensiblement que de la lumière émise par la ou les sources lumineuses d'origine. En particulier, il ne dépend sensiblement pas de la lumière émise par la ou les sources lumineuses asservies.

De préférence, la caméra est fixée, de manière amovible, sur un support de caméra, de préférence rigidement fixé sur le support de capteurs. Le support de caméra est de préférence pourvu de moyens d'attache de la caméra désactivables manuellement.

De préférence, la ou les sources lumineuses d'origine sont fixées, de préférence rigidement et de manière non amovible, sur la caméra. En particulier, la ou les sources lumineuses d'origine sont de préférence constituées par le flash ou tout autre moyen d'éclairage classiquement intégré dans une caméra.

On décrit aussi un dispositif de convoyage de biens comprenant au moins :
- une voie de convoyage de biens, et
- un dispositif de vision industrielle selon l'invention, les sources lumineuses asservies étant adaptées à éclairer au moins une portion de la voie de convoyage de biens.

Dans un mode de réalisation, le dispositif de convoyage comprend en outre une unité de tri commandée par un module électronique de commande relié à un dispositif de numérisation du dispositif de vision industrielle, pour trier les biens convoyés sur la voie de convoyage en fonction d'images prises par le capteur optique du système de caméra.

Selon autre aspect, l'invention concerne un procédé de commande d'un éclairage de dispositif de vision industrielle selon l'invention, le procédé comprenant les étapes consistant à :
i) émettre des signaux lumineux d'origine ;
ii) capter les signaux lumineux d'origine émis ;
iii) traiter les signaux lumineux d'origine captés pour en déduire une commande d'une ou plusieurs sources lumineuses asservies ;
iv) commander une ou plusieurs sources lumineuses asservies conformément à la commande déduite à l'étape iii).

Selon des modes de réalisation préférés, le procédé présente une ou plusieurs des caractéristiques suivantes, prises seules ou en combinaison :
- l'étape iii) consiste à traduire des bits de signaux lumineux d'origine émis en paramètres de commande d'une source lumineuse asservie, les paramètres comprenant de préférence une identification de la source lumineuse asservie et/ou une intensité pour la lumière à émettre par la source lumineuse asservie et/ou une couleur pour ladite lumière ;
- le procédé de commande est mis en œuvre dans un dit dispositif de convoyage.

### Brève description des figures

D'autres caractéristiques et avantages de l'invention apparaîtront à la lecture de la description détaillée qui suit, laquelle description fait référence aux dessins ci-annexés parmi lesquels :
- la figure 1 représente schématiquement un dispositif de vision industrielle ;
- la figure 2 illustre un système de caméra pouvant être mis en œuvre dans le dispositif de vision industrielle de la figure 1 ;
- la figure 3 montre schématiquement une interface de commande pour un dispositif d'éclairage pouvant être commandé à l'aide du système de caméra de la figure 2 ;
- la figure 4 illustre un système de caméra et une interface de commande pouvant être mis en œuvre dans un dispositif de vision industrielle de la figure 1 ;
- la figure 5 illustre la commande de DEL à l'aide d'une interface de commande de la figure 3 ;
- la figure 6 représente schématiquement une variante de dispositif d'éclairage pour dispositif de vision industrielle ;
- la figure 7 représente schématiquement un dispositif de convoyage de biens ;
- la figure 8 représente un ordinogramme d'un exemple de procédé de convoyage de biens ; et
- la figure 9 représente des chronographes représentant l'intensité i de la lumière émise par une source lumineuse d'origine (graphe supérieur) et par la source lumineuse asservie correspondante (graphe inférieur), en fonction du temps *t*.

Dans la présente description, les éléments identiques ou de fonction identique portent le même signe de référence. À fin de concision de la description, ces éléments ne sont pas décrits en regard de chaque figure.

### Description détaillée

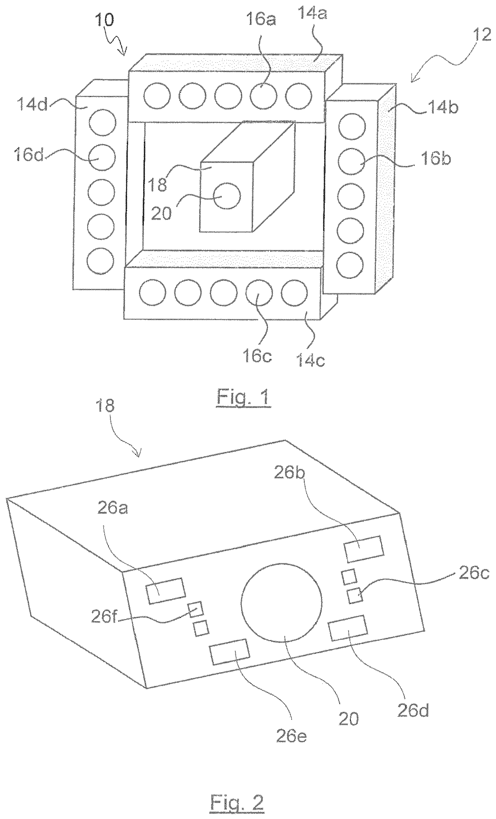

À la figure 1 est représenté un exemple de dispositif de vision industrielle 10. Ce dispositif 10 comprend un dispositif d'éclairage 12, pour éclairer une zone d'intérêt, par exemple une portion d'un tapis de convoyage. Le dispositif d'éclairage 12 comprend ici quatre supports de sources lumineuses asservies 14 (14a-14d) sur chacun desquels sont fixés cinq sources lumineuses asservies 16 (16a-16d) respectives, en l'espèce des DEL ou des groupes de DEL, fonctionnant de manière synchrone.

Le dispositif de vision industrielle 10 comprend également un système de caméra 18, indépendant du dispositif d'éclairage 12, pour capter une image de la zone d'intérêt éclairée par le dispositif d'éclairage 12. Le système de caméra est par exemple relié à une unité de traitement des images captées par la caméra pour identifier les biens se trouvant dans la zone d'intérêt éclairée et pour déterminer les biens qui ne sont pas conformes à un critère défini.

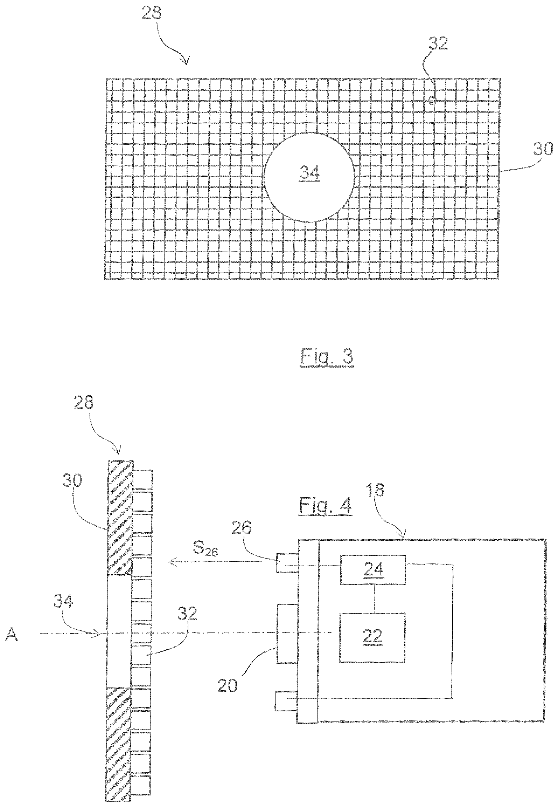

Le système de caméra 18, représenté plus en détails sur les figures 2 et 4, comprend un objectif 20 composé d'une lentille optique ou d'une pluralité de lentilles optiques, associé à un capteur optique 22 pour capter l'image de la zone d'intérêt éclairée par les sources lumineuses asservies 16. Le capteur optique 22 est relié à une carte électronique 24, notamment pour traiter les informations provenant du capteur optique 22 et en déduire une image numérisée de la zone d'intérêt.

Le système de caméra 18 comprend encore une pluralité de sources lumineuses d'origine 26, commandées par la carte électronique 24. Ces sources lumineuses d'origine 26 peuvent être de couleurs différentes et/ou orientées selon des directions d'émission différentes. Souvent, les sources lumineuses d'origine 26 ne permettent pas un éclairage satisfaisant de la zone d'intérêt, c'est-à-dire un éclairage qui permet au dispositif de vision industrielle 10 d'identifier et, par exemple, de trier les biens présents dans la zone d'intérêt.

C'est pourquoi le dispositif de vision industrielle 10 comporte encore une interface 28 de commande du dispositif d'éclairage 12, représentée plus en en détails sur les figures 3 et 4. Cette interface 28 est ici formée d'un support de capteurs 30 sur une face duquel sont fixés des capteurs de lumière 32. Le support de capteurs 30 est ici plan, de forme sensiblement rectangulaire, avec une ouverture 34 circulaire, réalisée en son centre. L'ouverture circulaire 34 permet au système de caméra 18 de capter des images de la zone d'intérêt éclairé par le dispositif d'éclairage 22, à travers le support de capteurs 30. Les dimensions du support 30 sont par exemple :
- une longueur supérieure à 50 mm et/ou inférieure à 90 mm, de préférence égale à 70 mm ;
- une largeur supérieure à 30 mm et/ou inférieure à 60 mm, de préférence égale à 45 mm.

L'ouverture circulaire 34 est par exemple de rayon supérieur à 12 mm et/ou inférieur à 30 mm. L'interface est par exemple disposée à une distance inférieure à 50 mm du système de caméra 18, par exemple de 20 mm.

Les capteurs de lumière 32, de préférence orientés vers les sources lumineuses d'origine 26, sont ici répartis de manière homogène. La densité de capteurs de lumière peut notamment être supérieure à un capteur de lumière pour 9 mm² et/ou inférieure à un capteur de lumière par mm². Il peut être préférable d'avoir une densité de capteurs de lumière relativement faible pour que la lumière émise par une source lumineuse d'origine 26 ne soit sensiblement captée que par un capteur de lumière 32. Ceci permet en effet, comme on le verra plus loin, de réaliser des commandes indépendantes des sources lumineuses asservies 16 éclairant la zone d'intérêt. Cependant, plus le nombre de capteurs de lumière 32 est élevé, plus le nombre et la complexité de commandes possibles sont grands. Dans un mode de réalisation, des capteurs de lumière 32 ne sont prévus qu'en vis-à-vis des sources lumineuses d'origine 26, à raison, par exemple, d'un capteur de lumière 32 par source lumineuse d'origine 26.

Les capteurs de lumière 32 sont par exemple de forme carrée, de 1 mm de côté.

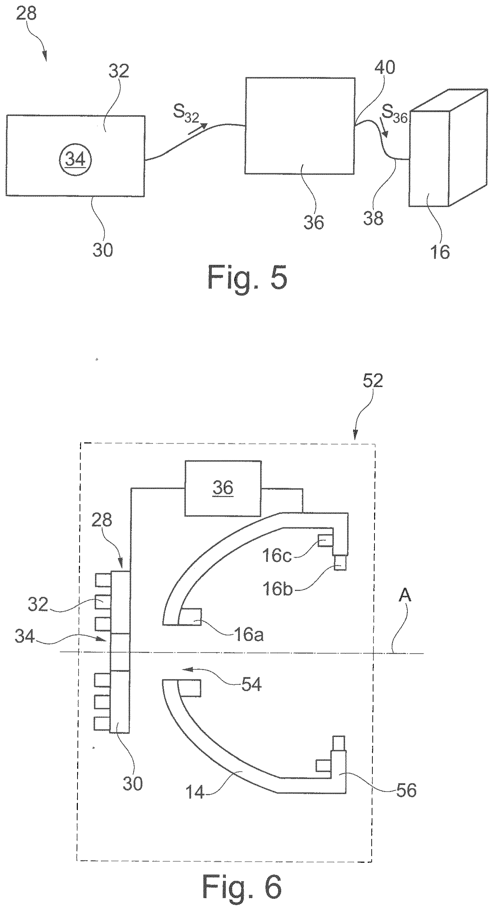

Comme illustré schématiquement par la figure 5, les capteurs de lumière 32 sont reliés à une unité électronique de traitement 36. L'unité électronique de traitement 36 traite les signaux S32 émis en sortie par les capteurs de lumière 32 et les traduit en signaux de commande S₃₆ pour les sources lumineuses asservies 16 du dispositif d'éclairage 12. Pour ce faire, l'interface 28 comporte des moyens de connexion 38 de sorties 40 de l'unité électronique de traitement 36, à une ou plusieurs sources lumineuses asservies 16 du dispositif d'éclairage 12, permettant de commander lesdites sources lumineuses asservies 16 en fonction des signaux lumineux d'origine S₂₆ émis par les sources lumineuses d'origine 26 du système de caméra. Les signaux lumineux d'origine peuvent ainsi indirectement commander les sources lumineuses asservies 16 du dispositif d'éclairage 12.

De préférence, l'unité électronique 36 détermine, en fonction des signaux S32 reçus des capteurs de lumière, l'identification d'une ou plusieurs sources lumineuses asservies 16 à commander et, pour chacune de ces sources lumineuses asservies 16, une intensité lumineuse et/ou une couleur pour la lumière à produire.

De préférence, les sources lumineuses asservies 16 sont commandées pour émettre de manière intermittente, de préférence pour émettre des flashs d'une durée inférieure à 10 ms, de préférence inférieure à 3 ms et préférentiellement inférieure à 200 µs. Avantageusement, l'éclairage intermittent évite de créer du flou sur les images lors du mouvement des pièces.

A chaque sortie 40 est associée une source lumineuse asservie, de préférence une ou plusieurs DEL, et un signal de commande pour ladite source lumineuse asservie.

Les sorties 40 peuvent être de simples bornes électriques, et les moyens de connexion 38 peuvent être des câbles électriques. De préférence, l'unité électronique 36 émet, à chaque sortie, un courant d'alimentation pour une source lumineuse asservie 16 du dispositif d'éclairage 12.

Avantageusement, l'unité électronique de traitement 36 est divisée en modules, notamment en modules indépendants, qui commandent chacun, de préférence en fonction d'une émission lumineuse respective reçue d'une source lumineuse d'origine 26 respective une source lumineuse asservie 16 respective, en particulier une DEL, ou s un groupe de DEL du dispositif d'éclairage 12, de manière indépendante. Ainsi, par exemple, un capteur de lumière 32, ou un groupe de capteurs de lumière 32, peut être relié fonctionnellement à un tel module indépendant, pour commander une DEL ou un groupe de DEL du dispositif d'éclairage 12. Chaque module peut avantageusement être constitué par un réseau de portes programmables (de l'anglais « *Field Programmable Gate Array* » ou FPGA) qui assure un temps de traitement réduit.

De préférence, l'unité électronique de traitement comporte plus de 3, plus de 7, plus de 15, plus de 127 sorties 40.

La figure 6 illustre une variante 52 de dispositif d'éclairage. Celui-ci se distingue du dispositif d'éclairage 12 des figures 3 et 4, essentiellement en ce qu'il comporte un unique support de sources lumineuses 14, de forme hémisphérique. Une ouverture 54, de préférence circulaire, est prévue dans le support 14, au niveau de son sommet, pour être disposée en vis-à-vis de l'ouverture 34 du support de capteurs 30 de l'interface 28. Les ouvertures 34 et 54 sont coaxiales, d'axe A.

Des sources lumineuses asservies 16a sont de préférence disposées en couronne autour de l'ouverture 54 du support 14. En outre, des sources lumineuses asservies 16b et 16c sont de préférence disposées en couronne sur la base 56 du support 14. Des sources lumineuses asservies 16b peuvent être orientées radialement vers l'axe A du support hémisphérique, parallèlement à l'axe A (16c) et/ou vers le sommet du support 14. Un support 14 hémisphérique permet généralement un éclairage plus homogène des zones d'intérêt d'un dispositif de vision industrielle qu'un dispositif d'éclairage à support 14 plan.

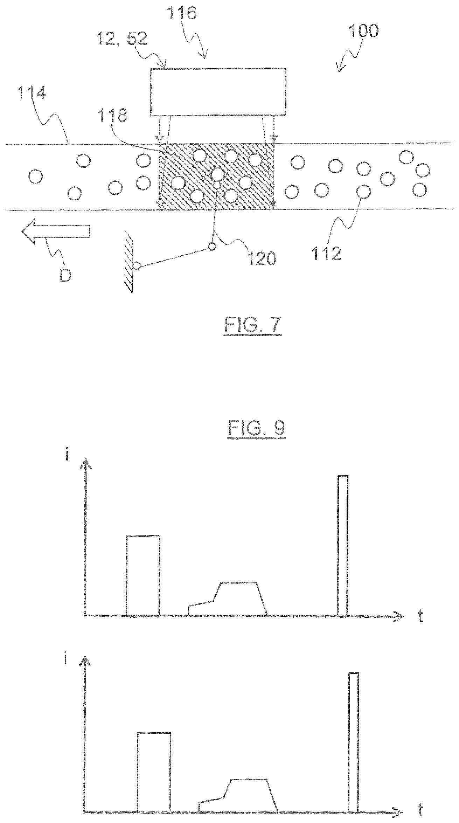

La figure 7 illustre schématiquement un dispositif 100 de convoyage industriel de biens 112. Ce dispositif de convoyage 100 comprend une voie de convoyage 114 convoyant les biens 112 dans la direction D. La voie de convoyage 114 est par exemple un tapis roulant. Le dispositif de convoyage 100 comprend un dispositif de vision industrielle 116, dont le dispositif d'éclairage 12, 52 peut notamment être tel que décrit précédemment en regard des figures 1 à 6. Le dispositif d'éclairage 12, 52 éclaire une zone d'intérêt 118 formée par un tronçon de la voie de convoyage 114, traversée par les biens 112.

Le dispositif de vision industrielle est par ailleurs connu en soi. Il peut notamment comporter une carte interface entre un ordinateur et la caméra pour numériser les images (aussi connu sous le nom de *"frame grabber"* en anglais et "carte d'acquisition vidéo" en français), si la caméra n'est pas adaptée à numériser l'image prise directement. La caméra peut être branchée directement sur un bus de communication (TCP-IP, USB, IEEE-1394 etc). Une unité de calcul, souvent un micro-ordinateur ou un système avec processeur embarqué (comme un DSP), permet, à l'aide d'un logiciel de traitement d'images, de déterminer les biens présents sur l'image prise, ne correspondant pas au critère de tri. Un senseur de synchronisation, souvent optique ou magnétique, ou des encodeurs, peuvent également être prévus, pour déclencher la caméra lorsqu'un bien passe dans son champ de vision. Un système d'entrées/sorties numériques, ou un système de communication « protocolé », par exemple connexion réseau ou RS-232 ou plus souvent RS-485 pour les longues distances, peut être prévu pour transmettre les données entre les différents éléments du dispositif de vision industrielle.

Le dispositif de convoyage 100 comprend encore une unité de tri 120 pour retirer de la voie de convoyage 114 les biens 112 sélectionnés, par exemple dont le contrôle par le dispositif de vision industrielle a révélé un défaut. En l'espèce, cette unité de tri est constituée d'un bras mobile 120 pour retirer des biens 112 de la voie de convoyage 114.

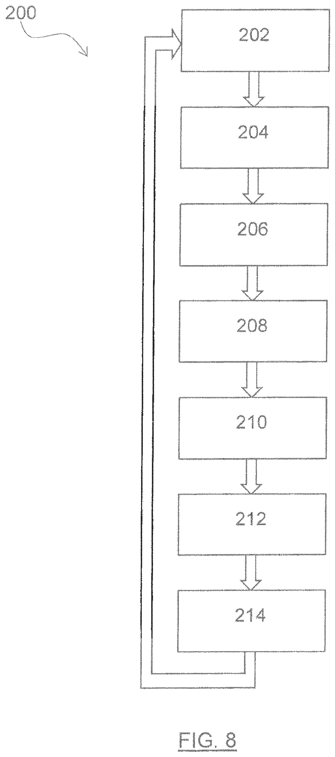

La figure 8 illustre un procédé 200 de convoyage industriel pouvant être mis en oeuvre , par exemple, dans un dispositif de convoyage industriel tel qu'illustré à la figure 7.

Selon ce procédé de convoyage 200, on procède tout d'abord à une étape 202 de convoyage de biens jusqu'à une zone d'intérêt 118.

Des signaux lumineux d'origine S₂₆ sont émis, à une étape 204, par les sources lumineuses d'origine 26 du système de caméra 18.

Ces signaux lumineux d'origine, sont captés à une étape 206 par les capteurs de lumière 32 de l'interface 28.

À l'étape suivante 208, les signaux émis par les capteurs de lumière 32 en réponse à la réception de ces signaux lumineux d'origine S₂₆ sont traités pour en déduire des signaux de commande S₃₆ d'une ou plusieurs sources lumineuses asservies 16 du dispositif d'éclairage 12. Cette commande s'effectue suivant un protocole, en fonction de la couleur émise et de la position de la ou des sources lumineuses d'origine 26 considérées.

Par exemple, une caméra disposant de 4 groupes de DEL multicolores intégrées pouvant s'allumer de couleur rouge, verte ou bleue, permet de réaliser au moins 2^3x2^4=8x16=128 lumières différentes.

Il ainsi possible de piloter, à l'aide de l'interface placée devant une caméra 18 disposant d'un tel éclairage intégré, au moins 128 sources lumineuses asservies, ou au moins 128 combinaisons de secteurs et de couleurs différentes. Les sources lumineuses asservies appartiennent de préférence à un éclairage externe (c'est-à-dire non-inclus dans le système de caméra 18). Il est ainsi possible de réaliser des séquences complexes d'éclairage, comme si les sources lumineuses asservies étaient pilotées directement par le logiciel du système de caméra 18.

À l'étape 210, l'éclairage de la zone d'intérêt 118 par le dispositif d'éclairage 12, 52 est réalisé selon la commande déduite à l'étape 208.

Comme représenté sur la figure 9, dans un mode de réalisation, le chronographe fournissant la puissance de la lumière émise par une source lumineuse d'origine 26 (graphe supérieur) est utilisé pour commander une source lumineuse asservie 16 afin qu'elle émette suivant le même chronographe (graphe inférieur). Le décalage temporel entre les deux courbes peut être inférieur à 50 µs, de préférence inférieur à 10 µs, de préférence inférieur à 5 µs.

Il s'ensuit, à l'étape 212, une prise de vue de la zone d'intérêt 118 par le système de caméra 18, cette image étant alors interprétée, de manière connue en soi, pour en déduire des informations sur les biens convoyés traversant la zone d'intérêt 118. Le tri 214 des biens ne répondant pas à un critère déterminé peut alors être réalisé.

Le procédé 200 peut alors être réitéré.

Comme cela apparaît clairement à présent, l'invention fournit une solution simple et flexible permettant une adaptation optimale d'un éclairage.

L'invention n'est pas limitée aux seuls exemples qui viennent d'être décrits et est susceptible de nombreuses variantes accessibles à l'homme du métier.

Ainsi, le système de caméra mis en œuvre peut comporter une ou plusieurs caméras numériques ou analogiques, monochromes ou en couleurs, munie(s) d'un objectif adapté aux conditions de prise d'image, notamment à la distance et la taille de la zone à prendre en image et/ou aux biens convoyés à identifier sur cette image.

Les applications ne sont pas limitées à un dispositif de convoyage industriel.

## Revendications

1. Dispositif de vision industrielle (10) comprenant :
- un système de caméra (18) comprenant une caméra et une pluralité de sources lumineuses d'origine (26) intégrées dans le système de caméra ; et
- un dispositif d'éclairage (12 ; 52) comprenant :
∘ une interface (28) de commande comprenant :
▪ une pluralité de capteurs de lumière (32) pour capter chacun un signal lumineux d'origine respectif, issu d'une ou plusieurs dites sources lumineuses d'origine, et émettre un signal de capteur respectif en réponse à la capture dudit signal lumineux d'origine respectif ;
▪ une unité électronique (36) de traitement dudit signal de capteur respectif configuré de manière à émettre, en conséquence dudit traitement, un signal de commande respectif à au moins une sortie (40) respective de l'unité électronique de traitement (36),
∘ une ou plusieurs sources lumineuses asservies (16) externes audit système de caméra, chacune reliée à une sortie (40) respective de l'unité électronique de traitement (36) par des moyens de connexion (38) respectifs, de manière à être commandée avec le signal de commande délivré à ladite sortie (40),
au moins un desdits capteurs de lumière (32) étant disposé de manière à capter directement de la lumière émise par ladite pluralité de sources lumineuses d'origine (26),
lesdits capteurs de lumière (32) étant configurés pour ne détecter qu'un spectre lumineux d'une largeur inférieure à 50 nm.

2. Dispositif de vision industrielle selon la revendication précédente, ledit spectre lumineux étant sensiblement centré sur une longueur d'onde discrète choisie parmi 470 nm, 525 nm, 635 nm, 660 nm, 850 nm, et 880 nm.

3. Dispositif de vision industrielle selon l'une quelconque des revendications précédentes, dans lequel l'unité électronique (36) est configurée de manière identifier une source lumineuse asservie à commander avec ledit signal de commande et de manière à générer ledit signal de commande en fonction d'une intensité lumineuse et/ou d'une couleur à émettre par ladite source lumineuse asservie.

4. Dispositif de vision industrielle selon la revendication immédiatement précédente, dans lequel l'unité électronique (36) est configurée de manière que l'intensité dudit signal de commande soit proportionnelle à l'intensité dudit signal lumineux d'origine.

5. Dispositif de vision industrielle selon l'une quelconque des revendications précédentes, dans lequel la ou les sources lumineuses asservies sont chacune une diode électroluminescente ou un groupe de diodes électroluminescentes (16).

6. Dispositif de vision industrielle selon l'une quelconque des revendications précédentes, dans lequel les sources lumineuses asservies sont fixées sur un support de sources lumineuses asservies (14) muni d'une ouverture de support de sources lumineuses asservies (54), et les capteurs de lumière sont fixés sur un support de capteurs (30) présentant une ouverture de support de capteurs (34) coaxiale avec ladite ouverture de support de sources lumineuses asservies (54).

7. Dispositif de vision industrielle selon l'une quelconque des revendications précédentes, dans lequel la ou les sources lumineuses asservies sont configurées pour émettre des flashs d'une durée inférieure à 10 ms et/ou un spectre lumineux d'une largeur inférieure à 100 nm.

8. Dispositif de vision industrielle selon l'une quelconque des revendications précédentes, dans lequel l'unité électronique (36) est configurée de manière à piloter les sources lumineuses asservies (16) en fonction de la chronologie des signaux de capteur reçus par l'unité électronique, et/ou de l'origine des signaux de capteur reçus par l'unité électronique, et/ou de la couleur de signaux lumineux d'origine reçus par lesdits capteurs de lumière.

9. Dispositif de vision industrielle selon l'une quelconque des revendications précédentes, dans lequel chaque capteur de lumière est disposé de manière à capter directement de la lumière émise par une unique source lumineuse d'origine respective ou par un unique groupe de sources lumineuses d'origine émettant de manière synchrone.

10. Dispositif de vision industrielle selon l'une quelconque des revendications précédentes, dans lequel le système de caméra est indépendant du dispositif d'éclairage.

11. Dispositif de vision industrielle selon l'une quelconque des revendications précédentes, comportant plusieurs capteurs de lumière (32) et plusieurs sources lumineuses d'origine, les capteurs de lumière étant orientés vers les sources lumineuses d'origine.

12. Dispositif de vision industrielle selon selon la revendication immédiatement précédente, dans lequel les capteurs de lumière (32) ne sont prévus qu'en vis-à-vis des sources lumineuses d'origine (26).

13. Dispositif de vision industrielle selon l'une quelconque des revendications précédentes, dans lequel ladite au moins une sortie (40) est une borne électrique et et les moyens de connexion (38) sont des câbles électriques.

14. Procédé de commande d'un éclairage de dispositif de vision industrielle selon l'une quelconque des revendications précédentes, comprenant les étapes consistant à :
i) émettre des signaux lumineux d'origine ;
ii) capter les signaux lumineux d'origine émis ;
iii) traiter les signaux lumineux d'origine captés pour en déduire une commande d'une ou plusieurs sources lumineuses asservies ;
iv) commander une ou plusieurs sources lumineuses asservies conformément à la commande déduite à l'étape iii).

15. Procédé selon la revendication précédente, comprenant les étapes consistant à :
a) déterminer une intensisté lumineuse et/ou une couleur pour la lumière à produire ;
b) identifier une ou plusieurs sources lumineuses asservies à commander en fonction des signaux lumineux d'origine captés pour obtenir l'intensisté lumineuse et/ou la couleur pour la lumière à produire ;
c) commander une ou plusieurs sources lumineuses asservies en fonction des signaux lumineux d'origine captés pour obtenir l'intensisté lumineuse et/ou la couleur pour la lumière à produire.

16. Procédé selon la revendication 14 ou 15, comprenant l'étape consistant à commander une source lumineuse asservie respective en fonction du signal lumineux d'origine d'une source lumineuse d'origine respective reçu par un capteur respectif.

## Patentansprüche

1. Maschinensichtvorrichtung (10), die Folgendes aufweist:
- ein Kamerasystem (18), das eine Kamera und eine Vielzahl von Ursprungslichtquellen (26) aufweist, die in das Kamerasystem integriert sind; und
- eine Beleuchtungsvorrichtung (12, 52) die Folgendes aufweist:
∘ eine Steuerschnittstelle (28), die Folgendes aufweist:
▪ eine Vielzahl von Lichtsensoren (32) zum Erfassen eines jeweiligen Ursprungslichtsignals, das von einer oder mehreren Ursprungslichtquelle(n) stammt, und zum Ausgeben eines jeweiligen Sensorsignals als Antwort auf das Erfassen des jeweiligen Ursprungslichtsignals;
▪ eine elektronische Einheit (36) zum Verarbeiten des jeweiligen Sensorsignals, die so ausgebildet ist, dass sie als Folge der Verarbeitung ein jeweiliges Steuersignal an mindestens einen jeweiligen Ausgang (40) der elektronischen Verarbeitungseinheit (36) ausgibt,
∘ eine oder mehrere geregelte Lichtquellen (16) außerhalb des Kamerasystems, von denen jede mit einem jeweiligen Ausgang (40) der elektronischen Verarbeitungseinheit (36) über jeweilige Verbindungsmittel (38) in der Art verbunden ist, dass sie mit dem am Ausgang (40) ausgegebenen Steuersignal gesteuert wird,
wobei mindestens einer der Lichtsensoren (32) so angeordnet ist, dass er direkt das von der Vielzahl der Ursprungslichtquellen (26) ausgegebene Licht erfasst, wobei die Lichtsensoren (32) so ausgebildet sind, dass sie nur ein Lichtspektrum mit einer Breite von weniger als 50 nm erfassen.

2. Maschinensichtvorrichtung nach dem vorhergehenden Anspruch, wobei das Lichtspektrum im Wesentlichen auf eine diskrete Wellenlänge konzentriert ist, die ausgewählt ist aus 470 nm, 525 nm, 635 nm, 660 nm, 850 nm und 880 nm.

3. Maschinensichtvorrichtung nach einem der vorhergehenden Ansprüche, wobei die elektronische Einheit (36) so ausgebildet ist, dass sie eine mit dem Steuersignal zu steuernde geregelte Lichtquelle identifiziert und dass sie das Steuersignal in Abhängigkeit von einer Lichtintensität und/oder einer von der geregelten Lichtquelle auszugebenden Farbe erzeugt.

4. Maschinensichtvorrichtung nach dem unmittelbar vorhergehenden Anspruch, wobei die elektronische Einheit (36) so ausgebildet ist, dass die Intensität des Steuersignals proportional zur Intensität des Ursprungslichtsignals ist.

5. Maschinensichtvorrichtung nach einem der vorhergehenden Ansprüche, wobei die geregelte(n) Lichtquelle(n) jeweils eine Leuchtdiode oder eine Gruppe von Leuchtdioden (16) ist/sind.

6. Maschinensichtvorrichtung nach einem der vorhergehenden Ansprüche, wobei die geregelten Lichtquellen auf einem Träger für geregelte Lichtquellen (14) befestigt sind, der mit einer Öffnung des Trägers für geregelte Lichtquellen (54) ausgestattet ist, und wobei die Lichtsensoren auf einem Sensorträger (30) befestigt sind, der eine Sensorträgeröffnung (34) aufweist, koaxial zur Öffnung des Trägers für geregelte Lichtquellen (54).

7. Maschinensichtvorrichtung nach einem der vorhergehenden Ansprüche, wobei die geregelte(n) Lichtquelle(n) so ausgebildet ist/sind, dass sie Blitze einer Dauer von weniger als 10 ms und/oder ein Lichtspektrum mit einer Breite von weniger als 100 nm ausgibt/ausgeben.

8. Maschinensichtvorrichtung nach einem der vorhergehenden Ansprüche, wobei die elektronische Einheit (36) so ausgebildet ist, dass sie die geregelten Lichtquellen (16) in Abhängigkeit von der zeitlichen Abfolge der von der elektronischen Einheit empfangenen Sensorsignale und/oder von dem Ursprung der von der elektronischen Einheit empfangenen Sensorsignale und/oder von der Farbe der von den Lichtsensoren empfangenen Ursprungslichtsignale steuert.

9. Maschinensichtvorrichtung nach einem der vorhergehenden Ansprüche, wobei jeder Lichtsensor so angeordnet ist, dass er direkt das Licht erfasst, das von einer einzigen jeweiligen Ursprungslichtquelle oder von einer einzigen Gruppe von synchron ausgebenden Ursprungslichtquellen ausgegeben wird.

10. Maschinensichtvorrichtung nach einem der vorhergehenden Ansprüche, wobei das Kamerasystem unabhängig von der Beleuchtungsvorrichtung ist.

11. Maschinensichtvorrichtung nach einem der vorhergehenden Ansprüche, die mehrere Lichtsensoren (32) und mehrere Ursprungslichtquellen aufweist, wobei die Lichtsensoren auf die Ursprungslichtquellen ausgerichtet sind.

12. Maschinensichtvorrichtung nach dem unmittelbar vorhergehenden Anspruch, wobei die Lichtsensoren (32) nur gegenüber den Ursprungslichtquellen (26) vorgesehen sind.

13. Maschinensichtvorrichtung nach einem der vorhergehenden Ansprüche, wobei der mindestens eine Ausgang (40) ein elektrischer Anschluss ist und die Verbindungsmittel (38) elektrische Kabel sind.

14. Verfahren zum Steuern einer Maschinensichtvorrichtungsbeleuchtung nach einem der vorhergehenden Ansprüche, das die folgenden Schritte aufweist zum:
i) Ausgeben der Ursprungslichtsignale;
ii) Erfassen der ausgegebenen Ursprungslichtsignale;
iii) Verarbeiten der erfassten Ursprungslichtsignale, um daraus einen Befehl für eine oder mehrere geregelte Lichtquelle(n) abzuleiten;
iv) Steuern einer oder mehrerer geregelter Lichtquelle(n) gemäß dem in Schritt iii) abgeleiteten Befehl.

15. Verfahren nach dem vorhergehenden Anspruch, das die Schritte aufweist zum:
a) Bestimmen einer Lichtintensität und/oder einer Farbe für das zu erzeugende Licht;
b) Identifizieren von einer oder mehreren geregelten Lichtquelle(n), die in Abhängigkeit von den erfassten Ursprungslichtsignalen zu steuern ist/sind, um die Lichtintensität und/oder die Farbe für das zu erzeugende Licht zu erhalten;
c) Steuern von einer oder mehreren geregelten Lichtquelle(n) in Abhängigkeit von den erfassten Ursprungslichtsignalen, um die Lichtintensität und/oder die Farbe für das zu erzeugende Licht zu erhalten.

16. Verfahren nach Anspruch 14 oder 15, das den Schritt zum Steuern einer jeweiligen geregelten Lichtquelle in Abhängigkeit vom Ursprungslichtsignal einer jeweiligen Ursprungslichtquelle, das von einem jeweiligen Sensor empfangen wird, aufweist.

## Claims

1. A machine-vision device (10) comprising:
- a camera system (18) comprising a camera and a plurality of origin light sources (26) that are integrated into the camera system; and
- a lighting device (12; 52) comprising:
∘ a control interface (28) comprising:
∘ a plurality of light sensors (32) each for capturing a respective origin light signal, issued from said one or a plurality of origin light sources, and emitting a respective sensor signal in response to the capture of said respective origin light signal;
▪ an electronic unit (36) for processing said respective sensor signal, configured so as to transmit, as a consequence of said processing, a respective control signal to at least one respective output (40) of the processing electronic unit (36),
∘ one or more automatically controlled light sources (16) that are external to said camera system, each connected to one respective output (40) of the processing electronic unit (36) by respective connecting means, so as to be controlled with the control signal delivered to said output (40),
at least one light sensor (32) being placed so as to directly capture the light emitted by one origin light source (26),
said light sensors (32) being configured to detect only a light spectrum of a width smaller than 50 nm.

2. The machine-vision device as claimed in the preceding claim, wherein said light spectrum is substantially centered on a discrete wavelength chosen from 470nm, 525nm, 635nm, 660nm, 850nm, and 880nm.

3. The machine-vision device as claimed in any one of the preceding claims, wherein the electronic unit (36) is configured so as to identify an automatically controlled light source to be controlled with said control signal and so as to generate said control signal depending on a light intensity and/or a color to be emitted by said automatically controlled light source.

4. The machine-vision device as claimed in the immediately preceding claim, wherein the electronic unit (36) is configured so that the magnitude of said control signal is proportional to the intensity of said origin light signal.

5. The machine-vision device as claimed in any one of the preceding claims, wherein the one or more automatically controlled light sources are each a light-emitting diode or a group of light-emitting diodes (16).

6. The machine-vision device as claimed in any one of the preceding claims, wherein the automatically controlled light sources are fastened to an automatically-controlled-light-source holder (14) that is equipped with an automatically-controlled-light-source-holder aperture (54), and the light sensors are fastened to a sensor holder (30) having a sensor-holder aperture (34) that is coaxial with said automatically-controlled-light-source-holder aperture (54).

7. The machine-vision device as claimed in any one of the preceding claims, wherein the one or more automatically controlled light sources are configured to emit flashes of a duration shorter than 10 ms and/or a light spectrum of a width smaller than 100 nm.

8. The machine-vision device as claimed in any one of the preceding claims, wherein the electronic unit (36) is configured so as to drive the automatically controlled light sources (16) depending on the timing of the sensor signals received by the electronic unit, and/or on the origin of the sensor signals received by the electronic unit, and/or on the color of the origin light signals received by said light sensors.

9. The machine-vision device as claimed in any one of the preceding claims, wherein each light sensor is placed so as to directly capture the light emitted by a single respective origin light source or by a single group of origin light sources that emit synchronously.

10. The machine-vision device as claimed in any one of the preceding claims, wherein the camera system is independent of the lighting device.

11. The machine-vision device as claimed in any one of the preceding claims, comprising a plurality of light sensors (32) and a plurality of origin light sources, the light sensors being oriented toward the origin light sources.

12. The machine-vision device as claimed in the immediately preceding claim, wherein the light sensors (32) are provided only facing origin light sources (26).

13. The machine-vision device as claimed in any one of the preceding claims, wherein said at least one output (40) is an electrical terminal, and the connecting means (38) are electrical cables.

14. A method for controlling lighting for a machine-vision device as claimed in any one of the preceding claims, comprising the steps of:
i) emitting origin light signals;
ii) capturing the emitted origin light signals;
iii) processing the captured origin light signals in order to deduce therefrom the way in which to control one or more automatically controlled light sources;
iv) controlling one or more automatically controlled light sources in the way deduced in step iii).

15. A method as claimed in the preceding claim, comprising the steps of:
a) determining a light intensity and/or a color for the light to be produced;
b) identifying one or a plurality of automatically controlled light sources to be controlled depending on origin light signals captured in order to obtain the light intensity and/or the color for the light to be produced;
c) controlling one or more automatically controlled light sources depending on origin light signals captured in order to obtain the light intensity and/or the color for the light to be produced.

16. A method as claimed in claim 14 or 15, comprising the steps of controlling one respective automatically controlled light source depending on the origin light signal of a respective origin light source received by a respective sensor.
